# EUROPEAN PATENT APPLICATION

(11) **EP 4 235 630 A1**
(43) Date of publication of application: **30.08.2023**
(21) Application number: 22158814.8
(22) Date of filing: 25.02.2022
(51) Int. Cl.: G09B 11/00

(54) **WRITING INSTRUMENT**

(71) Applicant: BIC Violex Single Member S.A., 14569 Anoixi (GR)
(72) Inventor: Antonakis, Ion - Ioannis, 145 69 Anoixi (GR); Polygerinos, Panagiotis, 145 69 Anoixi (GR)
(74) Representative: Peterreins Schley

(57) **Abstract**

A writing instrument (10) for writing gesture acquisition, comprising:
- an elongate body portion (12) enabling a user to grip the writing instrument, wherein the body portion comprises a proximal end (P) and a distal end (D), the proximal end and the distal end defining a longitudinal axis (L) of the writing instrument;
- a first magnetic field sensor (14) disposed on the surface (11) of, or within, the writing instrument, wherein the first magnetic field sensor is configured to output a first magnetic field measurement at least partially characterising a component of (i) a pose and/or (ii) a location of the proximal end (P) of the writing instrument (10) relative to a first magnetic field (Ml) provided by an first magnet (46), wherein the magnetic field is incident on the first magnetic field sensor (14);
- processing circuitry (16) configured to transform the first magnetic field measurement into at least one pose and/or location sample of the writing instrument (10); and
- wireless communication circuitry (18) configured to communicate the at least one pose and/or location sample to a data processing device (50).

## Description

### Technical Field

The embodiments described in the following disclosure relate to a writing instrument for writing gesture acquisition, and an associated training pad, method, data processing apparatus, system, computer program element, and computer readable medium.

### Background

Monitoring and coaching students during writing exercises improves performance and the speed at which students learn to write. A pedagogical technique colloquially referred to as "air writing" is a teacher-led activity, where students write letters or shapes in the air using arm movements. Students may also verbalize the words. Air writing enables students to remember letter formation techniques, which are motion oriented memories - an entirely different memory to the visual form of the letter shape. Air writing exercises also strengthen the arm and shoulder muscles in preparation for handwriting. This is important because weak muscles lead to bad handwriting formation.

Air writing can also be used as a "stim" to help with student self-regulation. Writing letters and words in the air can be soothing for a hyperlexic child. Thus, air writing can enable hyperlexic children to remember, and to visualize the words that they hear. However, air writing techniques can be further improved.

### Summary

According to a first aspect, there is provided a writing instrument for writing gesture acquisition. The writing implement comprises an elongate body portion enabling a user to grip the writing instrument. The body portion comprises a proximal end and a distal end. The proximal end and the distal end define a longitudinal axis of the writing instrument. The writing implement comprises a first magnetic field sensor disposed on the surface of, or within, the writing instrument. The first magnetic field sensor is configured to output a first magnetic field measurement at least partially characterising a component of (i) a pose and/or (ii) a location of the proximal end of the writing instrument relative to a first magnetic field provided by a first magnet. The magnetic field is incident on the first magnetic field sensor.

The writing implement comprises processing circuitry configured to transform the first magnetic field measurement into at least one pose and/or location sample of the writing instrument, and wireless communication circuitry configured to communicate the at least one pose and/or location sample to a data processing device.

According to a second aspect, there is provided a training pad for writing gesture acquisition. The training pad comprises a first page comprising a first graphical symbol visible to a user, and a first magnet comprised on, or embedded in, or proximate to, the first page. The first magnet is configured to provide a first magnetic field defined by a first predetermined characteristic relative to the first graphical symbol.

According to a third aspect, there is provided a method for automatic gesture recognition, comprising:
- receiving, at a data processing device, a sequence of pose and/or location samples based on a plurality of magnetic field measurements each at least partially characterising a plurality of components of (i) a pose and/or (ii) a location of the proximal end of a writing instrument relative to a first magnetic field incident on a first magnetic field sensor;
- comparing the sequence of pose and/or location samples to one or more segment records; and
- generating one, or more, segment comparison metrics characterising the conformity of the sequence of pose and/or location samples to the one or more segment records.

According to a fourth aspect, there is provided a data processing device for gesture recognition comprising a wireless data modem, a processor and a data memory. The wireless data modem is configured to receive a sequence of pose and/or location samples. The sequence of pose and/or location samples are based on a plurality of magnetic field measurements. The plurality of magnetic field measurements at least partially characterise a plurality of components of (i) a pose and/or (ii) a location of the proximal end of a writing instrument relative to a magnetic field incident on at least a first magnetic field sensor. The processor is configured to compare the sequence of pose and/or location samples to one or more segment records and to generate one, or more, segment comparison metrics characterising the conformity of the sequence of pose and/or location samples to the one or more segment records.

According to a fifth aspect, there is provided a system comprising a writing implement according to the first aspect or its embodiments, a training pad according to the second aspect, or its embodiments, and a data processing device according to the fourth aspect, or its embodiments.

According to a sixth aspect, there is provided a computer program element comprising machine readable instructions which, when executed by a processor, cause the processor to perform the method according to the third aspect, or its embodiments

According to a seventh aspect, there is provided a computer readable medium according to the sixth aspect.

Effects of the above aspects include the following. The pose and/or location of a writing instrument in a preset region relative to a writing training pad may be detected by monitoring changes in a magnetic field proximate to the writing instrument. In an "air writing" writing task as used in an educational context, a student is asked by a teacher, or by an interface of a data processing device executing an air writing software training program, to use a writing instrument to follow the segments of an exemplary letter displayed on writing training pad. The signals describing the pose and/or location of the writing instrument relative to the magnetic field so detected may be used to generate a segment comparison metric. This enables a comparison of a segment of a letter written by the student to the intended form of the segment. The student or their teacher may use the segment comparison metric to judge the progress of a student in an air writing exercise. The pose and/or location information can be obtained from the writing instrument in a contactless manner. The pose and/or location information can be used in real-time to assist a student or their teacher to write through guided air writing sessions, eventually enabling the teacher to supervise the student less.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as nonlimiting examples. Common reference numerals on different figures indicate like or similar features.
- **Figure 1**: schematically illustrates a side view of a writing instrument according to an example of the first aspect.
- **Figure 2**: schematically illustrates a coordinate system of a writing implement relative to a magnet.
- **Figure 3**: schematically illustrates an element of a magnetic sensor
- **Figure 4**: schematically illustrates four magnetic sensors in a resistive bridge topology.
- **Figure 5**: schematically illustrates an example of a position sensing signal from the resistive bridge of **Figure 4****.**
- **Figure 6**: schematically illustrates a plan view of an example of a training pad according to the second aspect.
- **Figure 7**: schematically illustrates a side view of the training pad of **Figure 6****.**
- **Figure 8**: schematically illustrates a method according to the third aspect.
- **Figure 9a**: schematically illustrates an example of data processing of pose and/or location signals according to the method of the third aspect.
- **Figure 9b**: schematically illustrates an example of the system deployed in a classroom with a plurality of users.
- **Figure 10**: schematically illustrates an example of a user display dialog box.
- **Figure 11**: schematically illustrates an example of a data processing apparatus according to the fourth aspect.
- **Figure 12**: schematically illustrates a system according to a fifth aspect.

### DETAILED DESCRIPTION

Air writing exercises can be facilitated using a writing instrument comprising a magnetic sensor, and a training pad with passive magnetic tags. This enables touchless pen pose and/or location estimation, relative to the training pad. One or more of the pages of the training pad contain a graphical character visible to a user that a user should attempt to duplicate in an air writing exercise using the writing instrument. The magnetic sensor detects or measures the magnetic field due to the passive magnetic tag comprised in the training pad. Dependent on the pose and/or location of the writing instrument relative to the training pad, the magnetic sensor comprised in the writing instrument produces one or more variable output signals.

The variable output signal is received by software capable of determining the pose and/or location of the writing instrument. The software is capable of providing guidance to a user of writing instrument during an air writing exercise, based on the signals received from the writing instrument.

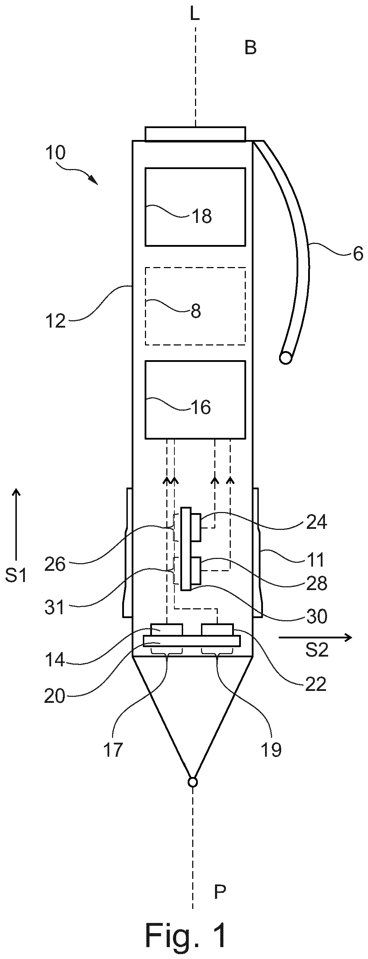

**Figure 1** schematically illustrates a side view internal view of a writing instrument according to an example of the first aspect.

According to a first aspect, there is provided a writing instrument 10 for writing gesture acquisition, comprising an elongate body portion 12 enabling a user to grip the writing instrument. The body portion comprises a proximal end P and a distal end D, the proximal end and the distal end defining a longitudinal axis L of the writing instrument.

The writing instrument 10 further comprises a first magnetic field sensor 14 disposed on the surface 11 of, or within, the writing instrument. The first magnetic field sensor is configured to output a first magnetic field measurement at least partially characterising a component of (i) a pose and/or (ii) a location of the proximal end (P) of the writing instrument 10 relative to a first magnetic field M1 provided by a first magnet 46. The magnetic field is incident on the first magnetic field sensor 14.

The writing instrument 10 further comprises processing circuitry 16 configured to transform the first magnetic field measurement into at least one pose and/or location samples of the writing instrument 10. The wireless communication circuitry 18 is configured to communicate the at least one pose and/or location sample to a data processing device 50.

Referring to **Figure 1**, in examples, the writing implement 10 may have a circular, ovular, square, rectangular, pentagonal, hexagonal, or heptagonal cross-section along at least a portion.

The form-factor of the elongate body 12 may change along the longitudinal axis L of the writing implement 10 to accommodate ergonomic variations or to enhance user comfort, for example (not illustrated).

In an example, the total length of the writing instrument 10 in the longitudinal direction L is between 50mm and 200mm, and specifically 140mm. In an example, when the writing implement 10 has a circular cross-section, the maximum diameter of the writing implement is in the range of 6mm to 20mm, and specifically 9mm. The elongate body of the writing implement 10 may, for example, comprise injection moulded from polystyrene or polypropylene.

In the illustrated example, the external surface of the writing instrument 10 comprises, near to its distal end D, a clip 6 for facilitating attachment to a user's pocket, for example. The writing implement 10 may comprise, near to the proximal end, a user grip comprised of a resilient material such as rubber. The user grip may be moulded to achieve an ergonomic match with a typical user profile, to enhance writing comfort.

The processing circuitry 16 may comprise a microcontroller or microprocessor suitable for low energy, real-time processing such as an ARM (TM) Cortex A510, although skilled person will be able to use other microprocessors and circuitry. The wireless communication circuitry 18 comprises a chipset capable of performing bidirectional wired data communication with the processing circuitry 16, and bidirectional or unidirectional wireless communication with another node in a wireless communication network. In particular, the wireless communication circuitry 18 is capable of communicating via Bluetooth (TM), Bluetooth Low Energy (TM), WiFi (TM) (802.11a, b, g, n, ac, ad), Wireless USB, UMTS, LTE, ZigBee (TM), and the like.

The writing instrument 10 also comprises a power source 8 for providing electrical power to the electronic circuitry of the writing instrument 10. In an example, the power source 8 is an alkaline battery (such as a AAA or an AA battery), a lithium battery, a Li-ion battery, and the like. The battery can be embedded in the writing instrument, and either be disposable or rechargeable.

The writing instrument 10 further comprises a first magnetic field sensor 14, and optionally may comprise at least a further (second) magnetic field sensor 22. The first magnetic field sensor 14 disposed on a first sensor substrate 20 that is planar, and has a predefined orientation with respect to the longitudinal axis L of the writing instrument 10. As illustrated in the example of **Figure 1**, the orientation of the first sensor substrate 20 is substantially orthogonal to the longitudinal axis L. Examples of the design of a magnetic field sensor will be discussed subsequently. The first magnetic field sensor 14 is configured to transfer a continuously variable signal to the processing circuitry 16 that, at least partially, characterises a component of the pose and/or location of the writing instrument 10 with respect to an external magnetic field M1 provided by a first magnet 46 of a training pad 40, for example.

The first magnetic field sensor 14 can transfer the continuously variable signals in analogue form. In this case, the processing circuitry 16 comprises an analogue to digital converter to convert the continuously variable signals into digital form that can be processed by the processing circuitry 16. In an example, the first magnetic field sensor 14 natively converts the continuously variable signals to digital form before transmitting them to the processing circuitry 16. The first magnetic field sensor 14 has an axis or sensitivity SI, representing an axis along which the signals from the first magnetic field sensors 14 displays the greatest peak to peak variation for a unit of displacement.

In use, a user turns the writing instrument 10 on using an activation switch or gesture (not shown). At a remote data processing apparatus, the user pairs the writing instrument 10, so as to enable software at the remote data processing apparatus to receive signals characterising the component of the pose and/or location of the proximal end P of the writing instrument 10 relative to a magnetic field M1. The user then holds the writing instrument 10 proximate to a training pad 40 (to be discussed subsequently). The training pad 40 comprises at least one magnet 46a. As the first magnetic field sensor 14 near to the proximal end P of the writing instrument is traced in an "air writing" exercise, variations in the strength of a magnetic field M1 are detected by at least the first magnetic field sensor 14 to characterise component of the pose and/or location of the proximal end of the writing instrument.

The magnetic field sensor 14 is sampled at a sampling rate enabling reproduction of the formation of a segment of an air writing exercise. A higher sampling rate of the magnetic field sensor 14 results in a higher required data processing and transfer rate to an external data processing apparatus. For example, the processing circuitry 16 may sample the magnetic field sensor 14 of at a frequency in the ranges 5-10 Hz, 10-20 Hz, 20-50 Hz, 50-75 Hz, 75-100 Hz, 100-500 Hz, 500 Hz -1 kHz, or 1 - 10 kHz.

In an embodiment, the processing circuitry 16 is configured to identify a page of a training pad 40 based on the magnitude and/or direction of a magnetic field M1 detected by at least the first magnetic field sensor 14, for example by comparing the magnitude and/or direction of a magnetic field M1 to a lookup table that defines a relationship between magnetic field characteristics and the pages of the training pad 40.

The processing circuitry 16 is configured to transmit the identified page to external data processing apparatus. In examples, no determination of the page of the training pad is made by the writing instrument, with the determination being computed at the external data processing apparatus.

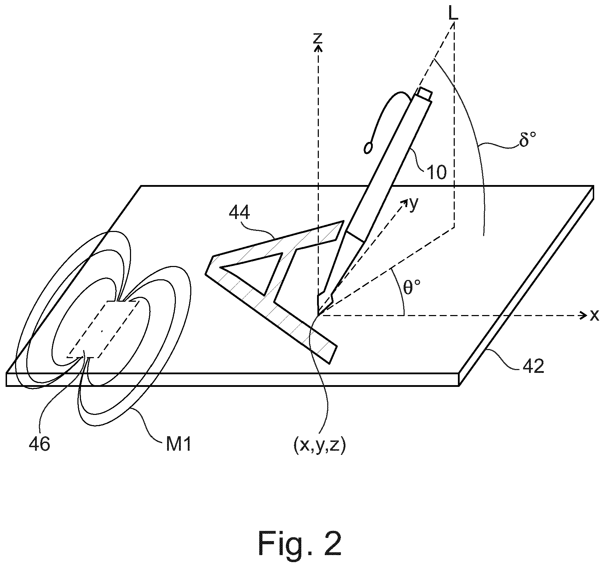

**Figure 2** schematically illustrates a coordinate system of a writing implement relative to a magnet. A first page 42 of a training pad 40 comprises a first magnet 46 that establishes a magnetic field M1 illustrated by the exemplary magnetic field lines. A skilled person will appreciate that the magnetic field M1 due to magnet 40 also extends further than the magnetic field lines illustrated in **Figure 2****,** but that the first magnetic field lines are omitted for clarity. The first magnet 46 is arranged on the first page 42 of the training pad 40 in a predefined orientation relative to the graphical symbol 44. As the writing implement 10 is moved to different locations of the graphical symbol 44, at least the first magnetic field sensor 14 of the writing implement 10 will characterise the corresponding variation in the magnetic field M1.

An example of a coordinate system for defining a component of a pose and/or location of the proximal end of the writing instrument will now be discussed. A skilled person will appreciate that dependent on the number, type, and placement of magnetic sensors in or on the body of the writing implement 10, many other forms of coordinate system can be used.

For example, the plane of the first page 42 of the training pad 40 defines a 2D domain around which the writing instrument 10 may move when an air writing exercise is in progress. The 2D domain comprises lateral locations (x, y). The vertical displacement (z) of the proximal end P of the writing implement 10 characterises the height of the proximal end of the writing implement above the first page 42 of the training pad 40. In an example, the locations relative to the training pad 40 (x,y,z) are referenced to an origin represented, for example, by the corner of the first page 42 In an example, the locations (x,y,z) are relatively defined. In an example, the locations (x,y) are sufficient to characterise a set of location samples defining the outcome of a writing exercise, provided only monitoring the fidelity of the reproduction of the graphical symbol 44 by a student in the plane of the first page 42 is relevant. In an example, the locations (x,y,z) of the proximal end of the writing instrument 10 are used to generate a location sample without a characterisation of component of the pose of the writing implement 10.

**Figure 2** illustrates one exemplary definition of the pose of a writing implement 10. In this case, the pose of the writing can in turn is defined according to the azimuth angle θ° and the angle of elevation δ° of the longitudinal axis L of the writing implement 10. Tracking the pose of the writing instrument 10 during an air writing exercise is not essential, because fidelity to an example graphical symbol may be judged by software using only the 2D location of the writing instrument 10, for example. However, monitoring of the pose may enable a teacher to diagnose poor grip posture when performing the air writing exercise.

In embodiments, the writing instrument 10 is configured to perform writing gesture acquisition based on monitoring a change of orientation of the longitudinal axis L and/or the location of the proximal end P of the writing instrument relative to the magnetic field of the first magnet 46, in use.

A range of different types of magnetic field sensing elements 15a-d may be used in writing implement 10.

For example, a Hall element is based on the phenomenon that the electromotive force appears in a direction orthogonal to both the current and the magnetic field when applying a magnetic field is perpendicular to the current to the object through which that current is flowing. When a current is applied to a thin film semiconductor, a voltage corresponding to the magnetic flux density and its direction is output according to the Hall effect. The Hall effect may, therefore, be used to detect a magnetic field. Hall elements can detect a magnetic field even in the case of a static magnetic field with no time-varying change in magnetic flux density at a given location.

Magneto-impedance (MI) sensors are capable to measure the large change of electrical impedance experienced by a soft magnetic material when subjected to an external magnetic field. MI sensors may detect small magnetic fields.

Giant magnetoresistance (GMR) -based magnetic sensors use materials comprising magnetic micro-or nano metre -sized particles and detect magnetic fringing fields of the particles. GMR sensors are sensitive, inexpensive, and portable, as well as being compatible with standard silicon planar integrated circuit technology. For example, a 2D magnetic field sensor comprising GMR spin valves may be integrated on an ultra-thin polyimide foil as discussed the paper "Magnetosensitive E-skins with directional perception for augmented reality", by Cañón Bermudez et. al, 19 January 2018, "Science Advances" 2018; 4,:eaao2623.

Another type of magnetic position sensor is the anisotropic magneto resistive sensor (AMR). Anisotropic magnetoresistance is observed in certain ferrous materials. The ferrous materials are disposed as a planar strip to become a resistive element. Four AMR resistive elements can be disposed, in the same plane, in a Wheatstone bridge configuration.

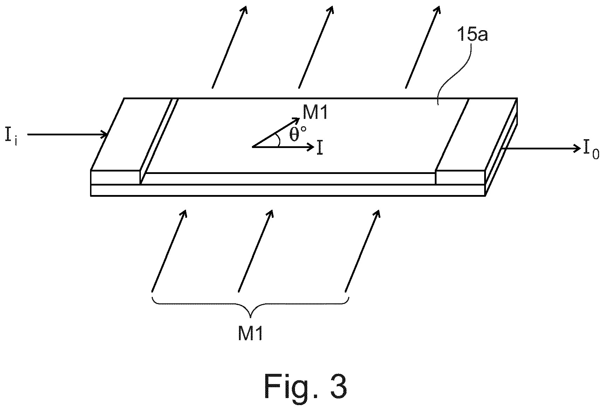

**Figure 3** schematically illustrates an example of a magnetic field sensing element 15a, used as a single magnetic field sensing element 15a of a first magnetic field sensor 14. The angle θ° in **Figure 3** represents the angle between a magnetic field vector (magnetic moment) of the applied magnetic field M1 and the direction of current flow through the magnetic field sensing element 15a. This type of magnetic field sensing element 15a changes resistance with a cos²θ relationship, where θ is the angle between the direction of the flow of current through the magnetic field sensing element 15a, and the direction of the magnetic field. Therefore, this type of magnetic field sensing element 15a tends to have an elongate form to ensure that the current flow has a well definable direction relative to an incident magnetic field.

In an example, the magnetic field sensing element 15a is an anisotropic magnetoresistance (AMR) sensor. In an example, the magnetic field sensing element 15a is a GMR sensing element. In an example, the magnetic field sensing element 15a is a Hall sensing element. In an example, the magnetic field sensing element 15a a magneto-impedance (MI) sensing element comprising amorphous wires or glass coated microwires.

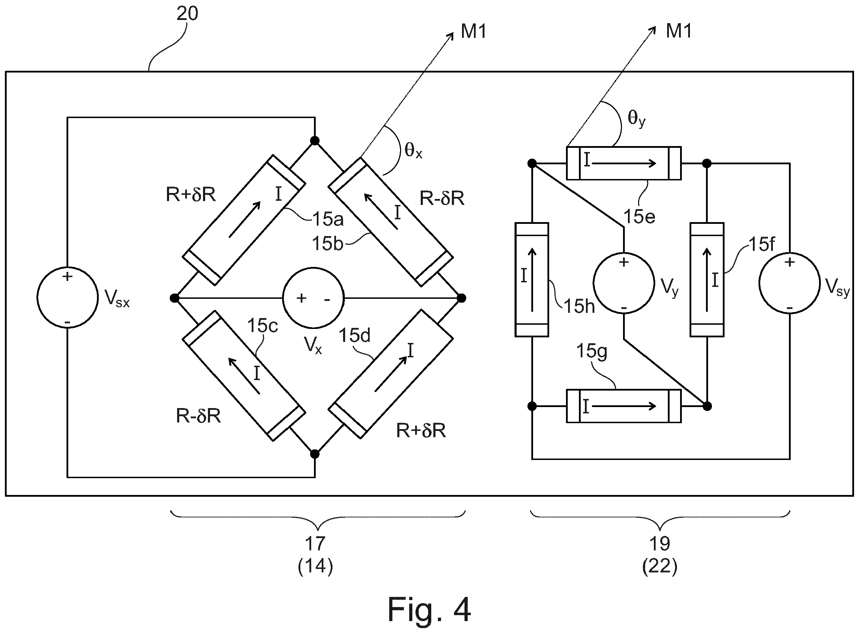

**Figure 4** schematically illustrates a first magnetic field sensor 14 and a second magnetic field sensor 22. Each of the first magnetic field sensor 14 and a second magnetic field sensor 22 comprise four magnetic field sensing elements 15a-15h in corresponding first 17 and second 19 resistive bridge configurations, specifically as two Wheatstone bridges.

In particular, **Figure 4** simultaneous illustrates an example of a spatial relationship and an electrical schematic relationship between the four magnetic field sensing elements 15a-15d when arranged on a planar sensor substrate 20. In an example, the planar sensor substrate is a polyimide foil. A skilled person will appreciate that other types of magnetic field sensing elements 15a-15d that change their resistance based on the angle of incidence of the magnetic field can also be arranged in a resistive bridge configuration.

In **Figure 4****,** the exemplary incident direction of the magnetic field is shown by arrow M1. Four identical magnetic field sensing elements 15a-d are physically arranged with a spatially coplanar relationship on a first sensor substrate 20. In an example, the first sensor substrate 20 is a planar polyimide foil.

A direct current supply voltage V_{SX} is applied to the top and bottom connections of the resistive bridge 17. The first resistive bridge configuration 17 is exposed to an incident magnetic field M1. The voltage across the left and right connections of the resistive bridge 17 is measured, to obtain a voltage that is connected to the field angular orientation θ_{X} relative to the orientation of current flow in the magnetic field sensing elements 15a-d, and the field strength M1 of the first resistive bridge configuration 17.

In this example, when an incident magnetic field M1 is not present, the measured voltage is zero, or comprises a small DC offset. As the angle between the direction of physical current flow in the magnetic field sensing elements 15a-d and the direction of the magnetization of the magnetic field M1 changes, a differential voltage appears across the left and right terminals of the contacts. If the direction of the magnetic field M1 remains constant and the angular orientation of the substrate 20 varies through 360 degrees, a sinusoidal output voltage V_{SX} results.

In an example, the substrate 20 is aligned relative to the longitudinal axis L of the writing instrument 10 to enable the linear region of the output voltage (for example, corresponding to an angular deflection θ relative to the direction of the magnetic field M1 of between plus and minus 45 degrees) V_{SX} to be used for pose and/or location measurement of the writing implement 10.

In an example, a second magnetic field sensor 22 comprised of a second resistive bridge configuration 19 is provided on the first sensor substrate 20 to enable 2D location sensing in, for example, the (x,y) plane. In particular, the magnetic field sensing elements 15e-h of the second resistive bridge configuration 19 are orientated on the first sensor substrate 20 differently to the magnetic field sensing elements 15a-d of the first resistive bridge configuration 17. This means that the direction of current flow through each magnetic field sensing element 15e-h of the second magnetic field sensor 22 is different compared to the direction of current flow through magnetic field sensing elements 15a-d of the first resistive bridge configuration 17, enabling the detection of (x,y) translation of the first sensor substrate 20.

A skilled person will appreciate that the example of the first and second magnetic field sensors described above is not essential. In particular, some forms of magnetic field sensor do not require a resistive bridge. In an example, a magnetic field sensor 14 is comprised of a single magnetic field sensing element 15a. Furthermore, the first magnetic field sensor 14 and the second magnetic field sensor 22 do not need to be collocated on the same sensor substrate. In an example, the first magnetic field sensor 14 and the second magnetic field sensor 22 can be located on separate sensor substrates.

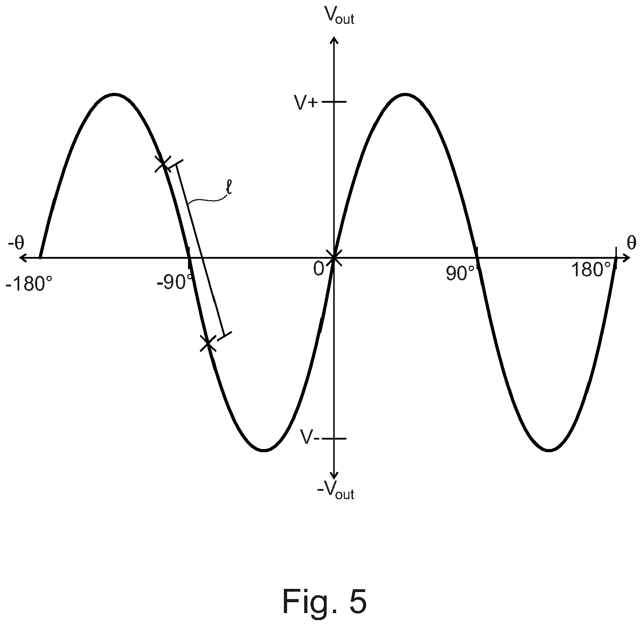

**Figure 5** schematically illustrates an example of a position sensing signal from the resistive bridge of **Figure 4****.**

As the angle θ defining the angle between the current flow in the magnetic field sensing elements 15a-d relative to the magnetic field direction M1 variance, the first resistive bridge configuration 17 of this example outputs a sinusoidal waveform. Therefore, the level of the output voltage from the first resistive bridge configuration 17 enables a characterisation of the component of the pose and/or location information of the writing instrument 10 in relative to a plane of interest. The output of the first resistive bridge configuration 17 may be digitised and transmitted to an external data processing device for determining the accuracy of a written segment during an air writing exercise.

In an example, the at least one magnetic field sensing element 15a comprised in the writing implement 10 is configured to change its resistance based on the direction of the incident of the magnetic field M1.

In an example, four magnetic field sensing elements 15a-d are arranged in a spatially coplanar relationship and are mutually configured as a resistive bridge configuration 17, to form a first magnetic field sensor 14.

In an example, the first magnetic field sensor 14 is configured to discriminate between the x and y in-plane components of the magnetic field.

In an example, a further four magnetic field sensing elements 15e-h of the second magnetic field sensor 22 are arranged in a spatially coplanar relationship to the magnetic field sensing element 15a-d (for example, on the same polyimide substrate as the magnetic field sensing elements of the first resistive bridge configuration 17), to form a second resistive bridge configuration 19. In embodiments, the first resistive bridge configuration 17 and the second resistive bridge configuration 19 mounted in the same plane are fed with phase-shifted voltage signals. For example, the first resistive bridge configuration 17 may be driven by a signal having a 90 degree phase shift to the signal driving the second resistive bridge configuration 19. The benefit of this is that improved angular resolution of the magnetic field M1 is possible.

The provision of a first resistive bridge configuration 17 thus enables the localisation of the writing instrument 10 in the first 2D plane. The provision of a second resistive bridge configuration 19 coplanar to the first resistive bridge configuration 17 enables improved position and/or angular accuracy of resolution in the first 2D plane.

In embodiments, the writing instrument 10 further comprises a second magnetic field sensor 22 configured to output a second magnetic field measurement. The second magnetic field sensor 22 is disposed on the surface 11 of, or within, the writing instrument. The second magnetic field measurement at least partially characterises a second component of the (i) pose and/or (ii) the location of the proximal end of the writing instrument relative to a magnetic field provided by at least the first magnet 46 incident on the second magnetic field sensor 22.

A first magnetic field sensor 14 in combination with a second magnetic field sensor 22 may comprise a first resistive bridge configuration 17 and a second resistive bridge configuration 19. If the resistive bridge configurations 17 and 19 are Wheatstone bridges, then the total of eight magnetic field sensing elements 15 are provided on a planar first sensor substrate 20. Each of the magnetic field sensing elements 15 has a well-defined magnetic anisotropic axis. In an example, the magnetic field sensing elements 15 are thus integrated in Wheatstone bridges having orthogonal sensitivity axes to realize a 2D motion sensor.

In embodiments, the first magnetic field sensor 14 comprises a first plurality of magnetic field sensing elements 15a,b electronically coupled in a first resistive bridge configuration 17. The second magnetic field sensor 22 comprises a second plurality of magnetic field sensing elements 23a,b electronically coupled in a second resistive bridge configuration 19. The first and second magnetic field sensors are arranged on a first sensor substrate 20 in a coplanar configuration.

In embodiments, at least one of the magnetic field sensing elements 15a,b of the first plurality of magnetic field sensing elements are arranged on the first sensor substrate 20 along a first sensitivity axis S1. At least one of the magnetic field sensing elements 23a,b of the second plurality of magnetic field sensing elements are arranged on the first sensor substrate 20 along a second sensitivity axis S2.

In embodiments, the first sensitivity axis S1 is orthogonal to the second sensitivity axis S2.

In embodiments, a third magnetic field sensor 24 configured to output a third magnetic field measurement. The third magnetic field sensor comprises a third plurality of magnetic field sensing elements coupled in a third resistive bridge configuration 26, and a fourth magnetic field sensor 28 configured to output a fourth magnetic field measurement. The fourth magnetic field sensor 28 comprises a fourth plurality of magnetic field sensing elements coupled in a fourth resistive bridge configuration 31. The third and fourth magnetic field sensors are arranged on a second sensor substrate (30) in a coplanar configuration.

In an example, the third magnetic field sensor 24 and the fourth magnetic field sensor 28 are sensors of the same type as illustrated in Figure 4, with the difference that the second sensor substrate 30 upon which the third magnetic field sensor 24 and the fourth magnetic field sensor 28 are supported has a different, for example an orthogonal, orientation to the first sensor substrate.

In embodiments, the first sensor substrate 20 is orthogonal to the second sensor substrate 30.

Providing a second sensor substrate 30 comprising a third resistive bridge configuration 26 and a fourth resistive bridge configuration 31 coplanar with the third resistive bridge configuration 26 enables 3D information to be determined. An example of 3D information is the vertical displacement of the writing implement 10 in the z direction (as illustrated in **Figure 1****)** above the writing surface. By sampling the vertical displacement of the writing implement 10 as an air writing exercise is being performed, the air writing trajectory can be more accurately identified.

For example, the third resistive bridge configuration 26 and a fourth resistive bridge configuration 31 comprised on the second sensor substrate 30 illustrated in **Figure 1**. The third resistive bridge configuration 26 and a fourth resistive bridge configuration 31 are configured to detect a third (z) component of motion of the longitudinal axis of the writing instrument 10 relative to at least a first magnetic field M1, and/or an angle of elevation δ° of the writing instrument 10.

In embodiments, the first 14 and second 22 magnetic field sensors each comprise a Hall sensor, an anisotropic magnetoresistance sensor, a giant magnetoresistance sensor, or an amorphous wire magneto impedance sensor. In an example, the first 14 and second 22 magnetic field sensors are thin-film magnetic sensors.

Many thin-film sensors are provided on a bendable or conformable substrate (such as polyimide). Accordingly, at least a first magnetic field sensor 14 may be conformed to the elongate body portion of the writing instrument 10. In an example, at least a first magnetic field sensor 14 may be distributed as a strip along the longitudinal axis of the writing instrument 10.

In embodiments, the processing circuitry 16 of the writing instrument 10 is configured to obtain a plurality of first magnetic field measurements during a motion segment of the writing instrument 10. The processing circuitry 16 is configured to transform the plurality of first magnetic field measurements into a corresponding plurality of pose and/or location samples characterising a motion segment of the writing instrument.

For example, the processing circuitry 16 receives time-indexed samples of the signal output from at least the first magnetic field sensor 14, and/or in addition the second magnetic field sensor 22, the third magnetic field sensor 26, and the fourth magnetic field sensor 28. The time-indexed samples comprising magnetic field measurements characterising the pose and/or location of the writing instrument may be transmitted as data tuples to a data processing device 74 for comparison to segment records. The samples of the magnetic field measurements obtained by the magnetic field sensors may be pre-processed, normalised, and the like.

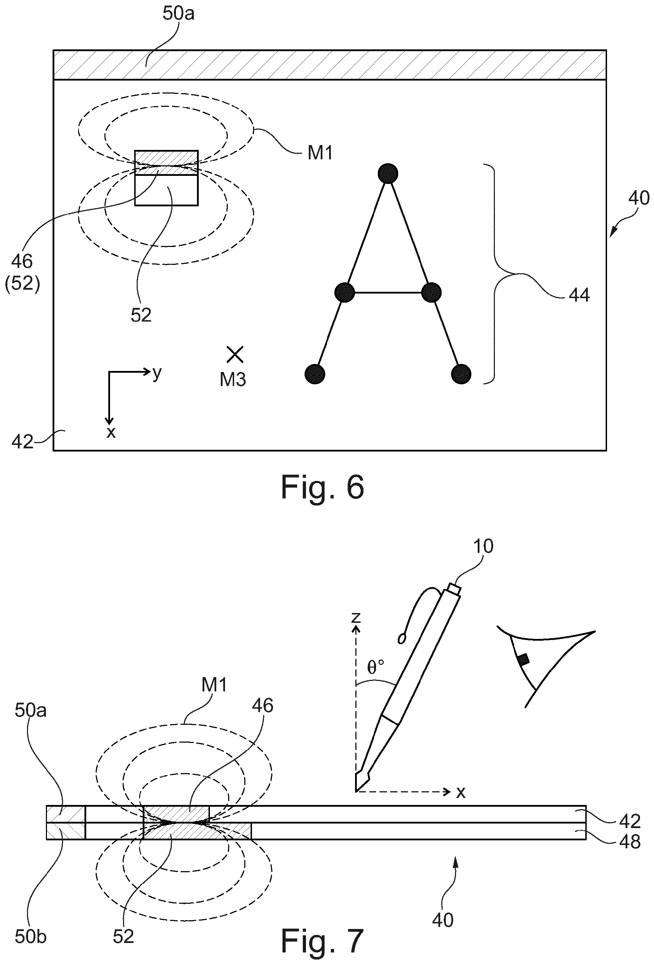

**Figure 6** schematically illustrates a plan view of an example of a training pad 40 according to the second aspect.

In the example of **Figure 6**, the training pad 40 has the form of a notepad with each page showing a graphical symbol 44 for use in an air writing exercise. For example, a first page 42 of the training pad 40 has a first magnet 46 capable of inducing a first magnetic field M1 attached, or embedded in, the first page 42. In an example, the first magnet 46 has a unique shape, or strength, enabling its magnetic field M1 to be distinguished from other magnets in the training pad 40.

In an example, the first magnetic field M1 of the first magnet 46 of the training pad 40 is configured to detected by the at least one magnetic field sensor 14 of a writing instrument 10 according to the first aspect or its embodiments.

For example, the first page 42 of the training pad 40 may be a paper, cardboard, or flexible plastic page. The first magnet 46 may be embedded inside the first page 42, or adhesively attached to an upper or lower surface of the first page 42.

The first page 42 has printed upon its visible surface a graphical symbol 44 for use in an air writing exercise. The graphical symbol 44 is in the form of a letter "A". Typically, a letter "A" comprises three segments - two mutually opposed slanting segments and a horizontal cross segment. The relationship of the graphical symbol 44 to the first magnet 46, and the first magnetic field M1 is illustrated in **Figure 6****.**

As a user traces the proximal end P of writing instrument 10 around the graphical symbol 44, at least the first magnetic field sensor 14 detects a change in the orientation and/or flux of the first magnetic field M1 whilst tracing the three segments. By recording the sequence of measurements during the tracing of three segments, a sequence of pose and/or location samples obtained which may be compared to a set of segment records in a data processing device, in order to identify the letter that a student attempted to air write.

Therefore, according to a second aspect, there is provided a training pad 40 for writing gesture acquisition. The training pad comprises a first page 42 comprising a first graphical symbol 44 visible to a user, and a first magnet 46 comprised on, or embedded in, or proximate to, the first page. The first magnet is configured to provide a first magnetic field M1 defined by a first predetermined characteristic relative to the first graphical symbol.

The first predetermined characteristic may be, for example, the absolute magnetic field strength of the first magnet 46, or the spatial disposition first magnet 46 in the plane defined by the first page 42 of the training pad 40. Although a first magnet 46 having a rectangular plan view is illustrated in **Figure 6**, a predetermined characteristic defining the first magnetic field M1 may be defined by a first magnet 46 having a triangular, circular, or arbitrary shape in the plane of the first page 42 relative to other pages of the training pad 40. If the first magnetic field M1 has a unique predetermined characteristic relative to other pages of training pad 40, magnetic field strength measurements using the writing instrument 10 can be used to identify which page of the training pad 40 is currently being displayed to a user.

In embodiments, the training pad 40 further comprises a second page 48. An attachment region 50b of the second page is attached to the first page 42 along a corresponding attachment region 50a of the first page. The second page 48 comprises a second graphical symbol. The training pad 40 further comprises a second magnet 52 comprised on, or embedded in, the second page. The second magnet 52 is configured to provide a second magnetic field M2 defined by a second predetermined characteristic relative to the second graphical symbol.

**Figure 7** schematically illustrates a side view of the training pad of **Figure 6**. In this case, the training pad 40 may comprise of a first page 42 attached to a second page 48 along attachment regions 50a, 50b, respectively. For example, the first page 42 and the second page 48 may be attached using an adhesive strip, a ring binding, a staple, and the like.

The second page 48 comprises a second magnet 52. As illustrated, the second magnet 52 has a slightly greater lateral spatial extent as opposed to the first magnet 46. This is an example of a second predetermined characteristic - in other words, the second magnet 52 has a different spatial extent as compared to the first magnet 46, and its magnetic field lines will be distributed differently in the vicinity of the second page 48 of the training pad 40. For reasons of clarity, the second magnetic field M2 is not illustrated in **Figure 7** but it may be assumed to have a greater spatial extent as compared to the first magnetic field 46 in the illustrated example.

In embodiments, the training pad 40 is configured such that when the first page 42 overlies the second page 48, the first 46 and second magnets 52 are aligned with each other along a common axis that is substantially perpendicular to the first and second pages, such that a resultant magnetic field M3 comprised of at least the first M1 and second M2 magnetic fields is generated. In the words, an example, the magnets of the training pad are overlaid in substantially the same lateral location on each page of the training pad such that when the pages of the training pad are closed, the magnets are aligned such that the generate a stronger magnetic field. This magnetic field can, for example, identify that the training pad 40 is closed, or open at a determinable page, for example.

In embodiments, the training pad 40, the magnitude and/or orientation of the first magnetic field M1 is configured to be distinguishable from the magnitude and/or orientation of the second magnetic field M2, thus causing a writing implement 10 comprising at least a first magnetic field sensor 14 to detect the resultant magnetic field M3 if the training pad is in a first state. The first page 42 overlies the second page 48. The writing instrument 10 can detect the second magnetic field M2 that is different to the resultant magnetic field M3, if the training pad 40 is in a second state, in which the first page 42 does not overly the second page 48.

In an example, the first magnet 46 is permanent magnet tape. In an example, the first magnet 46 comprises magneto-impedance amorphous wires, or glass coated micro-wires. Such tags have a thickness not exceeding a few hundred microns.

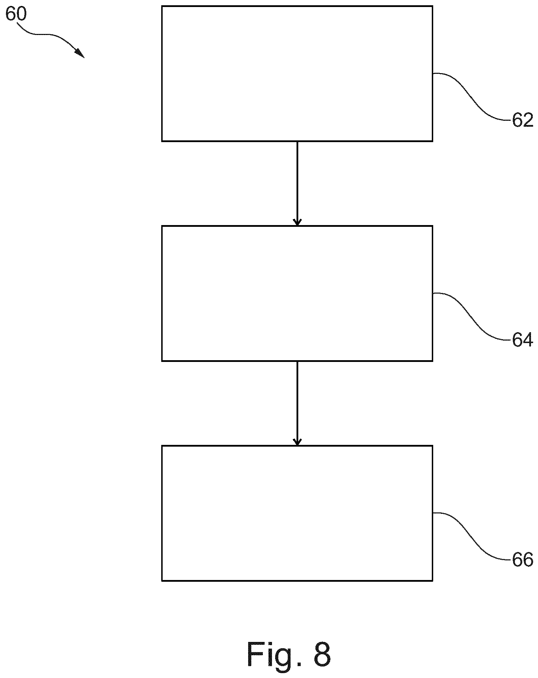

**Figure 8** schematically illustrates a method according to the third aspect.

According to a third aspect, there is provided a method 60 for automatic gesture recognition, comprising:
receiving 62, at a data processing device 50, a sequence of pose and/or location samples 68 based on a plurality of magnetic field measurements each at least partially characterise a plurality of components of (i) a pose and/or (ii) a location of the proximal end of a writing instrument 10 relative to a first magnetic field M1 incident on a first magnetic field sensor 14;
comparing 64 the sequence of pose and/or location samples 68 to one or more segment records 65; and
generating 66 one, or more, segment comparison metrics 67 characterising the conformity of the sequence of pose and/or location samples to the one or more segment records.

Initially, a user may hold the writing instrument 10 over the training pad 40. A first page 42 of the training 40 comprises a graphical symbol 44 to a user that is to be written.

At least the first magnetic field sensor 14 and a second magnetic field sensor 22 comprised in the writing instrument 10 reads the magnetic field M1 first page 42 of the training pad 40. In examples, the first magnetic field sensor 14 and the second magnetic field sensor 22 are provided as a corresponding first resistive bridge configuration 17 and second resistive bridge configuration 19.

As the writing instrument 10 is manipulated (rotated, tilted, translated) during a specimen air writing task involving the graphical symbol 44, the variations of the magnetic field M1 of the first magnet 46, detected by at least the first magnetic field sensor 14 and the second magnetic field sensor 22, represent sampled components of a pose and/or a location of the proximal end of the writing instrument 10.

The processing circuitry 16 and the wireless communication circuit 18 transmit the sampled components of a pose and/or a location of the proximal end of the writing instrument 10 to, for example, a data processing device 70.

In an example, software executing within the data processing device 70 can identify the unique page of the training pad 40 by comparison of the measured magnetic field M1.

In embodiments, the method 60 further comprises:
displaying, to a user, an intended segment 69 or sequence of segments based on the one or more segment records; and
successively comparing the sequence of pose and/or location samples obtained from the plurality of magnetic field measurements to one or more segment records 65.

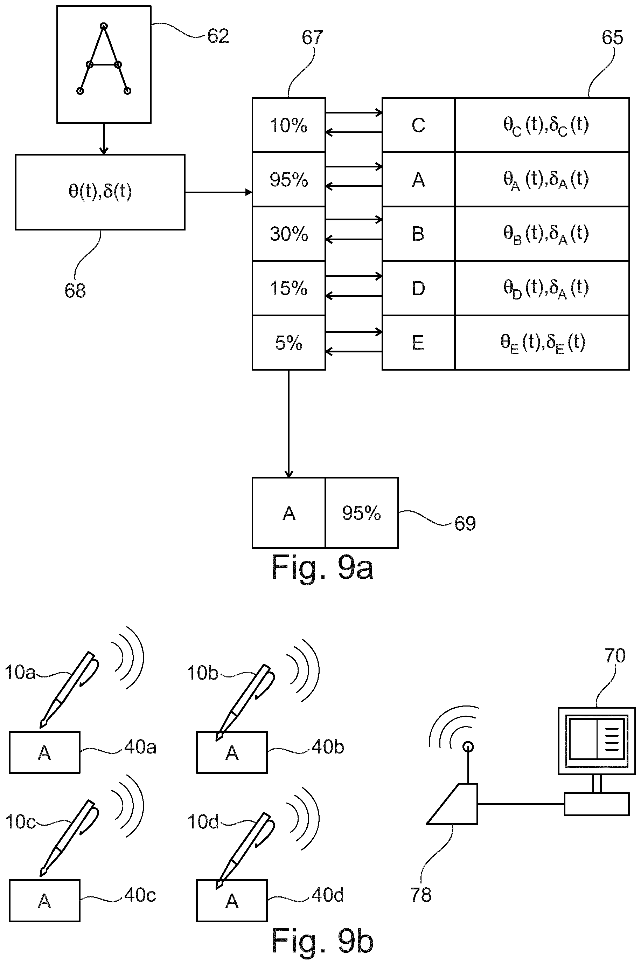

**Figure 9a** schematically illustrates an example data processing flow of pose and/or location signals according to the method of the third aspect.

A sequence of pose and/or location samples 68 measured by a writing instrument 10 according to the first aspect or its embodiments is received at a data processing device 70. The sequence of pose and/or location samples may comprise time-indexed tuples with measurements representing the azimuth and elevation angle of the writing instrument 10 (useful for defining the pose of the writing instrument 10), and lateral displacement samples defining the location of the proximal tip of the pen according to orthogonal coordinates (x, y, z), .

A data memory 76 of the data processing device 70 may comprise a plurality of segment records 65. For each page of a training pad 40, records comprising indicative sequences of sampled pose and/or location samples reference to the graphical symbol 44 illustrated on the relevant page 42 of the training pad 40 are compared to the sequence of pose and/or location samples received 62 by the data processing device 70.

One or more segment comparison metrics 67 are generated by comparing the sequence 68 with one or more of the segment records 65. Each of the segment comparison metrics 67 is a similarity measure capable of enabling a comparison of how close an air written letter is to the graphical symbol 44 included on the relevant page 42 of the training pad 40.

The obtained sequence of pose and/or location samples may be compared to one or more of the segment records using many time domain or frequency domain signal processing techniques for spatial trajectory comparison known to a person skilled in the art, such as Kalman filtering or least squares estimation.

Accordingly, an intended segment provided as a result in this case shows that the graphical symbol 44 of "A", as displayed on the first page 42 of the training pad 40 has been correctly written to within a 5% accuracy of the specimen segment record, representing a good result.

In embodiments, the method 60 further comprises:
receiving, at the data processing device 70, a magnetic field strength measurement measured by the writing instrument 10 identifying at least a first page 42 of a training pad 40; and
displaying, to the user, an intended segment 69 or sequence of segments based on the page identified by the magnetic field strength measurement.

Accordingly, the measurement of the first magnetic field M1 of the first page 42 of the training pad 40 enables identification of the first page 42 of the training pad at a data processing device 70. The data processing device 70 causes, in response, a user display, such as a tablet or smart whiteboard, to display an image of an intended segment to be traced during an air writing exercise.

In embodiments, the method 60 further comprises:
receiving, from a user interface of a data processing device 70, a user input identifying a current page of a gesture training pad; and
displaying, to the user, an intended segment or sequence of segments based on the user input identifying a page of a training pad.

In an exemplary use, a user may flip a page on the training pad 40 to a first page 42 containing a desired graphical symbol 44. The user holds the writing instrument 10 over the training pad 40. An initial task is for an external data processing device 70 that is paired to the writing instrument 10 to identify which page of training pad 40 a user of the writing instrument 10 has reached.

A magnetic sensor of the writing instrument 10 is therefore used to sense a first magnetic field M1. In some examples, the user holds the writing instrument 10 at a predetermined location on the first page 42 of the training pad 40. When the writing instrument 10 is held at the predetermined location, it measures the first magnetic field M1. In other examples, the user may be instructed to trace the end of the along a predefined path or line displayed on the first page 42, and the writing instrument obtains a calibration sample of the first magnetic field M1 sufficient to identify the capable of uniquely identifying the first page 42 of the training pad to software executing in the external data processing device 70. The writing instrument 10 transmits the samples of the first magnetic field 70 to the external data processing device 70. The external data processing device 70 make a determination of which page the training pad 40 has been set to. The external data processing device 70 then looks up which graphical symbol 44a-e is being displayed on the first page 42.

The software of the external data processing device 70 does not transmit any further instructions to a user of the writing instrument 10. Instead, the software of the external data processing device 70 detects that a user is performing an attempt at writing on the graphical symbol 44 of the first page 42 as the external data processing device 70 begins to receive samples of pose and/or location data from the writing instrument 10. The software of the external data processing device 70 performs processing of the received sequence of pose and/or location samples obtained from the plurality of magnetic field measurements to one or more segment records as discussed above.

In an example, the software of the external data processing device 70 displays, on a user display operatively connected to the data processing device 70, an example of a segment or graphical symbol to be traced during an air writing exercise corresponding to the graphical symbol 44 present on the first page 42 identified by reading the magnetic field unique to the first page 42.

In that example, the software of the external data processing device 70 can progressively instruct a student to complete one or more segments of the air writing exercise, and to correspondingly receive the sequence of pose and/or location samples resulting from each segment of the air writing exercise. The software of the external data processing device 70 can progressively compare pose and/or location samples received from writing instrument 10 with a set of ideal pose and/or location samples of each segment comprised in the set of segment records 65. Upon completion of an air writing exercise, the software of the external data processing device can provide a user with a score based on the comparison of the pose and/or location samples received from writing instrument 10 with a set of ideal pose and/or location samples of each segment comprised in the set of segment records 65.

In an example, the software of the external data processing device 70 can instruct the user to turn to the next page of the training pad 40 if the score exceeds a predetermined threshold.

In an example, the software of the external data processing device 70 can instruct the user to repeat the air writing exercise of the first page 42 if the score is lower than a predetermined threshold.

In an example, the software of the external data processing device 70 can instruct the user to repeat the air writing exercise of the first page 42 a plurality of times, such as ten or twenty times. Upon each completion of the repeated air writing exercise, a score is calculated, as previously, score based on the comparison of the pose and/or location samples received from writing instrument 10 with a set of ideal pose and/or location samples of each segment comprised in the set of segment records 65. In this example, the software of the external data processing device 70 can track the progressive change in ability of the student at each stage of the repeated air writing exercise, and, for example, issue audio or graphical feedback messages via user display that encourage the student to continue with the exercise, or ask a supervising teacher to assist the student, or provide advice on completing a specific segment or letter of the air writing exercise that appears to be causing a student difficulty.

As will be known to a skilled person, the audio or graphical feedback messages provided to the student via the user display 77 may be presented a simple graphical pop-up boxes with text or ordinary speech. In an example, the audio or graphical feedback messages can be integrated into a form of cartoon or game, to improve student persistence with the air writing exercise.

In embodiments, the method 60 further comprises:
updating a unique user record 65a with the one or more segment records 65.

A unique user record 65a of the segment records may enable a user of the writing instrument to save their attempts at a specific page of the training pad 40 over time, to enable tracking of improvement when performing a writing exercises.

**Figure 9b** schematically illustrates an example of the system deployed in a classroom with a plurality of users. A plurality of users manipulate a plurality of writing instruments 10a-10d in the vicinity of their own training pads 40a-d. Each writing instrument 10a-10d communicates a sequence of pose and/or location information obtained at each of the writing instruments 10a-10d to a wireless network node 78, and thereby to a data processing device 70. Unique user records 65a-d may be provided for each of the plurality of users, enabling a teacher to monitor the progress of an entire class during an air writing exercise.

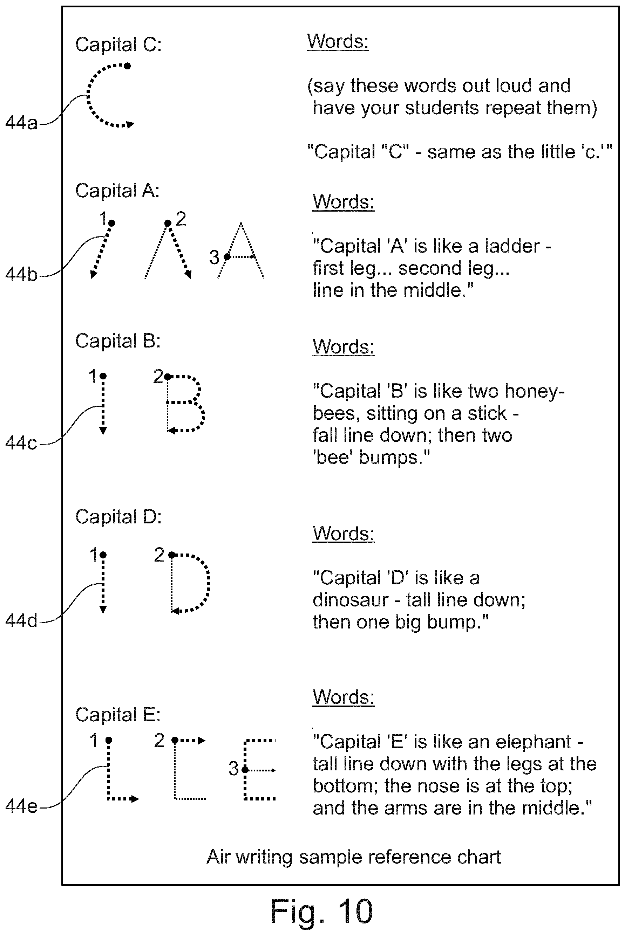

**Figure 10** schematically illustrates an example of a user display dialog box. The graphical symbols 44a-44e may be comprised on pages of a training pad 40. The user display dialog box may be displayed via a user interface of a data processing device 70 to provide instructions to a student when performing the air writing device using the training pad 40.

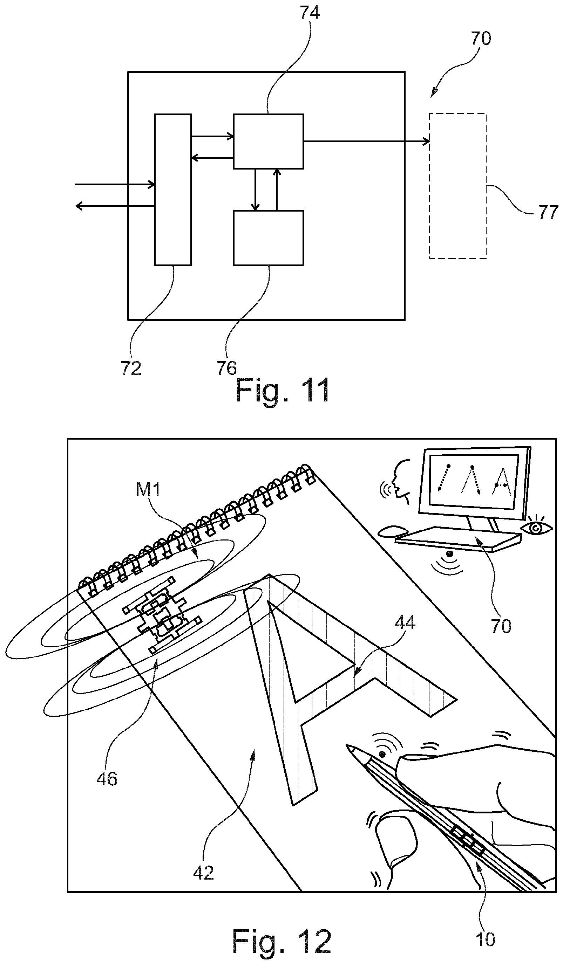

**Figure 11** schematically illustrates an example of a data processing apparatus according to the fourth aspect.

According to a fourth aspect, there is provided a data processing device 70 for gesture recognition comprising a wireless data modem 72, processor 74, and a data memory 76.

The wireless data modem 72 is configured to receive a sequence of pose and/or location samples. The sequence of pose and/or location samples are based on a plurality of magnetic field measurements, wherein the plurality of magnetic field measurements at least partially characterise a plurality of components of (i) a pose and/or (ii) a location of the proximal end P of a writing instrument 10 relative to a magnetic field M1 incident on at least a first magnetic field sensor 14.

The processor 74 is configured to compare the sequence of pose and/or location samples to one or more segment records 65 and to generate one, or more, segment comparison metrics 67 characterising the conformity of the sequence of pose and/or location samples to the one or more segment records 65.

For example, the data processing device is one of a smartphone, tablet, a desktop or laptop personal computer, and the like. For example, the data processing device is configured to execute the method according to the third aspect, or its embodiments.

**Figure 12** schematically illustrates a use of the system according to a fifth aspect.

According to a fifth aspect, there is provided a system 80 comprising a writing implement 10 according to the first aspect, or its embodiments, a training pad 30 according to the second aspect, or its embodiments, and a data processing device 70 according to the fourth aspect.

According to a sixth aspect, there is provided a computer program element comprising machine readable instructions which, when executed by a processor, cause the processor to perform the method according to the third aspect, or its embodiments.

According to a seventh aspect, there is provided a computer readable medium according to the sixth aspect.

References throughout the preceding specification to "one embodiment", "an embodiment", "one example" or "an example", "one aspect" or "an aspect" means that a particular feature, structure, or characteristic described in connection with the embodiment or example is included in at least one embodiment of the present disclosure. Thus, appearances of the phrases "in one embodiment", "in an embodiment", "one example" or "an example", "one aspect" or "an aspect" in various places throughout this specification are not necessarily all referring to the same embodiment or example.

Furthermore, the particular features, structures, or characteristics may be combined in any suitable combinations and / or sub-combinations in one or more embodiments or examples.

**REFERENCE NUMERALS**

| | | | |
|---|---|---|---|
| P | Proximal end | 52 | Second magnet |
| D | Distal end | M2 | Second magnetic field |
| L | Longitudinal axis | M3 | Resultant magnetic Field |
| 6 | Clip | 60 | Method for automatic gesture recognition |
| 8 | Power source | 64 | Comparing... |
| 10 | Writing instrument | 66 | Generating... |
| 11 | Surface of body portion | 65 | Segment records |
| 12 | Elongate body portion | 65a | Unique user record |
| 14 | First magnetic field sensor | 67 | Segment comparison metrics |
| 15a-h | Magnetic field sensing elements | 68 | Sequence of pose and/or location samples |
| 16 | Processing circuitry | 69 | Intended segment |
| 17 | First resistive bridge configuration | 70 | Data processing device |
| 18 | Wireless communication circuitry | 72 | Wireless data modem |
| 19 | Second resistive bridge configuration | 74 | Processor |
| 20 | First sensor substrate | 76 | Data memory |
| S1 | First sensitivity axis | 77 | User display |
| S2 | Second sensitivity axis | 78 | Wireless network node |
| 22 | Second magnetic field sensor | 80 | System |
| 24 | Third magnetic field sensor | | |
| 26 | Third resistive bridge configuration | | |
| 28 | Fourth magnetic field sensor | | |
| 30 | Second sensor substrate | | |
| 31 | Fourth resistive bridge configuration | | |
| 40 | Training pad | | |
| 42 | First page | | |
| 44 (a-e) | Graphical symbol | | |
| 46 | First magnet | | |
| M1 | First magnetic field | | |
| 48 | Second page | | |
| 50a,b | Attachment regions of pages | | |

## Claims

1. A writing instrument (10) for writing gesture acquisition, comprising:
- an elongate body portion (12) enabling a user to grip the writing instrument, wherein the body portion comprises a proximal end (P) and a distal end (D), the proximal end and the distal end defining a longitudinal axis (L) of the writing instrument;
- a first magnetic field sensor (14) disposed on the surface (11) of, or within, the writing instrument, wherein the first magnetic field sensor (14) is configured to output a first magnetic field measurement at least partially characterising a component of (i) a pose and/or (ii) a location of the proximal end (P) of the writing instrument (10) relative to a first magnetic field (M1) provided by at least a first magnet (46), wherein the magnetic field is incident on the first magnetic field sensor (14);
- processing circuitry (16) configured to transform the first magnetic field measurement into at least one pose and/or location sample of the writing instrument (10); and
- wireless communication circuitry (18) configured to communicate the at least one pose and/or location sample to a data processing device (50).

2. The writing instrument (10) according to claim 1,
wherein the writing instrument is configured to perform writing gesture acquisition based on monitoring a change of orientation of the longitudinal axis (L) and/or the location of the proximal end (P) of the writing instrument (10) relative to the first magnetic field of at least the first magnet, in use.

3. The writing instrument (10) according to one of the preceding claims, further comprising:
- a second magnetic field sensor (22) configured to output a second magnetic field measurement;
wherein the second magnetic field sensor (22) is disposed on the surface (11) of, or within, the writing instrument, and wherein the second magnetic field measurement at least partially characterises a further component of the (i) pose and/or (ii) the location of the proximal end of the writing instrument relative to the first magnetic field provided by at least the first magnet incident on the second magnetic field sensor (22).

4. The writing instrument (10) according to claim 3,
wherein the first magnetic field sensor (14) comprises a first plurality of magnetic field sensing elements (15a-d) electronically coupled in a first resistive bridge configuration (17);
wherein the second magnetic field sensor (22) comprises a second plurality of magnetic field sensing elements (15e-h) electronically coupled in a second resistive bridge configuration (19); and
wherein the first and second magnetic field sensors are arranged on a first sensor substrate (20) in a coplanar configuration.

5. The writing instrument (10) according to claim 4,
wherein at least one of the magnetic field sensing elements of the first plurality of magnetic field sensing elements (15a-d) is arranged on the first sensor substrate (20) along a first sensitivity axis (SI);
wherein at least one of the magnetic field sensing elements (23a,b) of the second plurality of magnetic field sensing elements are arranged on the first sensor substrate (20) along a second sensitivity axis (S2).

6. The writing instrument (10) according to one of the preceding claims,
wherein the processing circuitry (16) is configured to obtain a plurality of first magnetic field measurements from at least the first magnetic field sensing element during a motion segment of the writing instrument (10); and
wherein the processing circuitry (16) is configured to transform the plurality of first magnetic field measurements into a corresponding plurality of pose and/or location samples characterising a motion segment of the writing instrument (10).

7. A training pad (40) for writing gesture acquisition, comprising:
- a first page (42) comprising a first graphical symbol (44) visible to a user; and
- a first magnet (46) comprised on, or embedded in, or proximate to, the first page (42), wherein the first magnet (46) is configured to provide a first magnetic field (M1) defined by a first predetermined characteristic relative to the first graphical symbol (44).

8. The training pad (40) according to claim 7, further comprising:
- a second page (48), wherein an attachment region (50b) of the second page is attached to the first page (42) along a corresponding attachment region (50a) of the first page, wherein the second page (48) comprises a second graphical symbol; and
- a second magnet (52) comprised on, or embedded in, the second page, wherein the second magnet is configured to provide a second magnetic field (M2) defined by a second predetermined characteristic relative to the second graphical symbol.

9. The training pad (40) according to one of claims 7 or 8,
wherein, when the first page (42) overlies the second page (48), the first (46) and second magnets (52) are aligned with each other along a common axis that is substantially perpendicular to the first and second pages, such that a resultant magnetic field (M3) comprised of at least the first (M1) and second (M2) magnetic fields is generated.

10. A method (60) for automatic gesture recognition, comprising:
receiving (62), at a data processing device (50), a sequence of pose and/or location samples (68) based on a plurality of magnetic field measurements each at least partially characterises a plurality of components of (i) a pose and/or (ii) a location of the proximal end of a writing instrument (10) relative to a first magnetic field (M1) incident on a first magnetic field sensor (14);
comparing (64) the sequence of pose and/or location samples (68) to one or more segment records (65); and
generating (66) one, or more, segment comparison metrics (67) characterising the conformity of the sequence of pose and/or location samples to the one or more segment records (65).

11. The method (60) according to claim 10, further comprising:
displaying, to a user, an intended segment (69) or sequence of segments based on the one or more segment records (65); and
successively comparing the sequence of pose and/or location samples obtained from the plurality of magnetic field measurements to one or more segment records (65).

12. The method (60) according to claims 10 or 11, further comprising:
receiving, at the data processing device (50), a magnetic field strength measurement measured by the writing instrument (10), identifying? at least a first page (42) of a training pad (40); and
displaying, to the user, an intended segment (69) or sequence of segments based on the page identified by the magnetic field strength measurement.

13. A data processing device (70) for gesture recognition comprising:
- a wireless data modem (72);
- a processor (74); and
- a data memory (76);
wherein the wireless data modem (72) is configured to receive a sequence of pose and/or location samples, wherein the sequence of pose and/or location samples are based on a plurality of magnetic field measurements, wherein the plurality of magnetic field measurements at least partially characterise a plurality of components of (i) a pose and/or (ii) a location of the proximal end (P) of a writing instrument (10) relative to a magnetic field (M1) incident on at least a first magnetic field sensor (14);
wherein the processor (74) is configured to compare the sequence of pose and/or location samples to one or more segment records (65) and to generate one, or more, segment comparison metrics (67) characterising the conformity of the sequence of pose and/or location samples to the one or more segment records (65).

14. A system (80) comprising:
- a writing implement (10) according to one of claims 1-6;
- a training pad (30) according to one of claims 7-9; and
- a data processing device (70) according to claim 13.

15. A computer program element comprising machine readable instructions which, when executed by a processor, cause the processor to perform the method according to one of claims 10-12.
